Europäisches Patentamt

European Patent Office

Office européen des brevets

(19)

(11) **EP 1 526 739 A2**

(12) **EUROPEAN PATENT APPLICATION**

(43) Date of publication:
    **27.04.2005 Bulletin 2005/17**

(51) Int Cl.⁷: **H04N 7/50**

(21) Application number: **04000061.4**

(22) Date of filing: **05.01.2004**

(84) Designated Contracting States:
    **AT BE BG CH CY CZ DE DK EE ES FI FR GB GR
    HU IE IT LI LU MC NL PT RO SE SI SK TR**
    Designated Extension States:
    **AL LT LV MK**

(30) Priority: **13.10.2003 KR 2003071161**

(71) Applicant: **LG ELECTRONICS INC.**
    **Seoul (KR)**

(72) Inventor: **Seo, Kwang-Deok**
    **Gunpo Gyeonggi-Do (KR)**

(74) Representative: **von Hellfeld, Axel, Dr. Dipl.-Phys.**
    **Wuesthoff & Wuesthoff**
    **Patent- und Rechtsanwälte**
    **Schweigerstrasse 2**
    **81541 München (DE)**

(54) **Method for extracting macro block at high speed in mobile communication system**

(57)     A method for extracting a macro block at a high speed is disclosed to reset a motion vector in a DCT (Discrete Cosine Transform) region. A macro block is extracted by using an overlap phenomenon that a previously macro block information and an macro block information to be currently extracted overlap with each other, so that the amount of calculation can be considerably reduced compared to the conventional macro block extracting method.

# FIG. 6

**Description**

BACKGROUND OF THE INVENTION

1. Field of the Invention

The present invention relates to a method for extracting a macro block at a high speed for re-setting a motion vector when a video contents is manipulated in a discrete cosine transform (DCT) region.

2. Description of the Background Art

In general, video contents manipulation (contraction or deletion) is a process for suitably manipulating previously stored video contents according to a situation of each network and a (client's) terminal before they are being provided for service to various networks.

For example, video contents manipulation processes include re-setting a transmission bit rate according to various band widths of diverse networks and controlling resolution of video contents according to a resolution of a display unit of the terminal. The former process is called a bit rate transcoding and the latter is called a resolution transcoding.

In the contents manipulation in the DCT region, a motion vector re-setting process is commonly required for enhancing a picture quality of the manipulated contents.

Usually, if video contents is manipulated in the DCT region, a previously obtained motion vector loses its accuracy due to a change in characteristics of a manipulated image, a new motion vector should be set.

In a related art, in order to transmit contents to a network having a lower bandwidth than video contents which has been previously coded and stored in a database, a process of lowering a transmission bit rate of contents by using the bit rate transcoding or the resolution transcoding is adopted.

In addition, in order to resolve degradation of a picture quality of a finally transmitted image, a process of re-setting a motion vector is also performed

In general, in order to re-set a motion vector in the DCT region, sums of absolute difference (SAD) in the DCT region should be compared, for which a macro block predicted by a motion vector is first extracted in the DCT region.

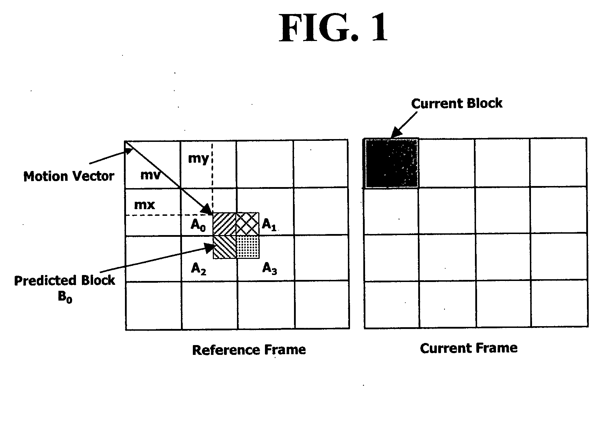

Figure 1 illustrates a basic method for extracting a macro block in the DCT region in accordance with a conventional art, in which a horizontal component (Mx) and a vertical component (my) of the motion vector are positive numbers.

With reference to Figure 1, in general, a macro block ($B_0$) predicted by a motion vector (mv) in the DCT region overlaps with portions of four blocks ($A_0 \sim A_3$) of a reference frame. The predicted macro block ($B_0$) is motion-compensated by the portions overlapping with four blocks ($A_0 \sim A_3$), and the predicted block ($B_0$) is expressed by a linear combination of the blocks ($A_0 \sim A_3$) by using equation (1) shown below:

$$B_0 = \sum_{i=0}^{3} P_i A_i Q_i \text{ -----------------------------------------(1)}$$

wherein

$$P_0 = P_1 = \begin{bmatrix} 0 & I_{8-(my)_8} \\ 0 & 0 \end{bmatrix}, \quad P_2 = P_3 = \begin{bmatrix} 0 & 0 \\ I_{(my)_8} & 0 \end{bmatrix}, \quad Q_0 = Q_2 = \begin{bmatrix} 0 & 0 \\ I_{8-(mx)_8} & 0 \end{bmatrix}, \quad Q_1 = Q_3 = \begin{bmatrix} 0 & I_{(mx)_8} \\ 0 & 0 \end{bmatrix},$$

$I_n$ is a unit matrix with a size of n x n, mx and my are horizontal and vertical components of the motion vector, $(mx)_8$ and $(my)_8$ are values of modulo 8 of mx and my, respectively, and 0s expressed in $P_0 \sim P_3$ and $Q_0 \sim Q_3$ are a zero matrix having a certain dimension.

As a result, the predicted macro block ($B_0$) is obtained by a linear combination of matrices obtained by multiplying the Pi and Qi matrices determined by mx and my to the left and right of $A_0 \sim A_3$.

Equation (1) can be expressed as follows by using the unit orthogonal transform characteristics of DCT:

$$\hat{B}_0 = \sum_{i=0}^{3} \hat{P}_i \hat{A}_i \hat{Q}_i \text{ -------------------------------------- (2)}$$

wherein $\hat{A} = DCT(A)$.

Equation (2) is required for extracting one macro block. Accordingly, by applying equation (2) four times, one macro block consisting of four luminance component blocks can be extracted.

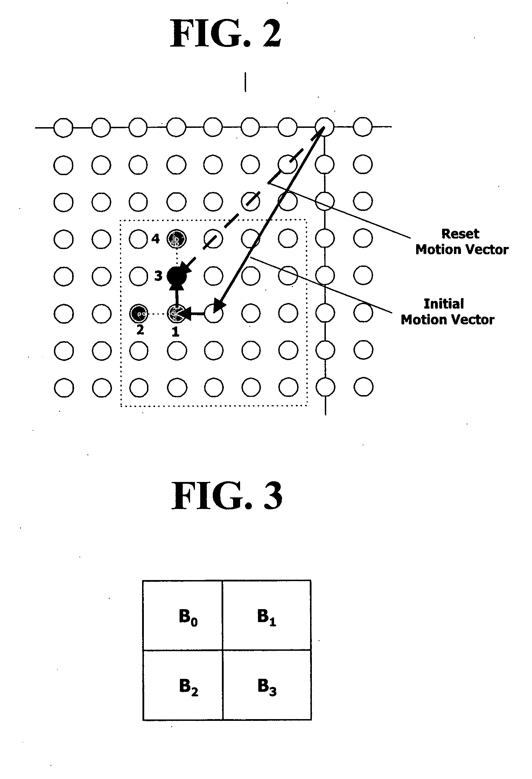

Figure 2 shows a high speed motion vector search pattern called an HVS (Horizontal and Vertical Search) method.

The size of the search region of the HVS is [-2, +2], and there are four check points.

The HVS method is that an optimum pixel position is searched in a horizontal direction in a pixel indicated by an initial motion vector, pixels positioned above and below the corresponding pixel are vertically searched to find a position of a pixel having the minimum SAD. A motion vector indicating the finally obtained pixel is a re-set motion vector that is finally obtained.

Thereafter, the conventional method of extracting a macro block will now be described by taking an example of the HVS method illustrated in Figure 2.

First, a macro block indicated by the initial motion vector is extracted through equation (2) and then SAD0 is obtained. A motion predicted macro block indicated by a first pixel distanced as much as one pixel position leftward from the pixel indicated by the initial motion vector is obtained through equation (2), and then, SAD1 is obtained. At this time, since SAD0 > SAD1, the second pixel is checked.

A motion predicted macro block indicated by the second pixel is extracted through equation (2), and then, SAD2 is obtained. In this case, since SAD1 < SAD2, a searching in a horizontal direction is finished and a position of a horizontal directional pixel indicated by a motion vector having a minimum SAD is determined as a first pixel.

Thereafter, a motion predicted macro block indicated by a third pixel is extracted through equation (2), and then, SAD3 is obtained. In case of Figure 2, since SAD1 > SAD3, a fourth pixel is checked. A motion predicted macro block indicated as the fourth pixel is extracted through equation (2), and then, SAD4 is obtained. In this case, since SAD3 < SAD4, the vertical directional searching is finished and a position of the vertical directional pixel indicated by the motion vector having the minimum SAD is determined as a third pixel.

Accordingly, a position of the pixel indicated by the motion vector having the minimum SAD is the third pixel, and the motion vector indicating the third pixel is finally determined as the re-set motion vector.

In this manner, in the conventional invention, the macro block predicted by the motion vector is extracted in the DCT region and compared with the SAD in the DCT region, thereby re-setting the motion vector.

However, the conventional macro block extracting method by equation (2) requires an excessive amount of calculation. That is, in equation (2), if mx and my are not a multiple of N, the amount of calculation is maximized, analysis of which is as follows.

First, equation (2) is obtained from multiplication of a matrix of N x N (N=8). The number of multiplications required to obtain AB, a multiplication of A and B, the NxN matrix is $N^3$, and the number of additions is $N^2(N-1)$. In this respect, in equation (2), since the multiplication of the matrix in the form of AB is performed eight times, the total number of multiplications is $8N3$ and total number of additions is $8N^2(N-1)$. Since this amount of calculation is made for each block, in case of one macro block including four luminous components, $32N^3$ times of multiplication and $32N^2(N-1)$ times of addition are required.

In addition, because the size of one DCT block is 8x8, if N is set to be 8, total 16384 times of addition and 14336 times of multiplication are required to extract one macro block. Such an excessive amount of calculation is burdensome in providing a high speed video contents service, and a high complexity is required.

As a matter of course, if mx or my is a multiple of N, the amount of calculation would be halved, and if both mx and my are a multiple of N, the amount of calculation is '0'. In addition, considering the fact that the blocks used in equation (2) are DCT blocks and many coefficients are '0', the amount of calculation can be reduced less than the number of multiplications and the number of additions obtained as described above. This, however, is not the general case, so the excessive amount of calculation according to equation (2) needs to be improved to provide the high speed video contents service.

SUMMARY OF THE INVENTION

Therefore, one object of the present invention is to provide a method for extracting a macro block at a high speed required for re-setting a motion vector.

Another object of the present invention is to provide a method for extracting a macro block capable of reducing an excessive amount of calculation in extracting a macro block.

To achieve at least the above objects in whole or in parts, there is provided a macro block extracting method in a wireless system in which a motion vector in a DCT region is reset for a video contents service between a network and a terminal, including: extracting a macro block indicated by an initial motion vector; and extracting a current macro block by using an overlap degree between the extracted macro block information and macro block information to be currently extracted.

The extracting step includes: setting an offset motion vector value by detecting an overlap degree between the previously extracted macro block information and macro block information to be currently extracted; and obtaining luminance component blocks of the current macro block by using different equations according to the set offset motion vector value.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

BRIEF DESCRIPTION OF THE DRAWINGS

The invention will be described in detail with reference to the following drawings in which like reference numerals refer to like elements wherein:

Figure 1 illustrates a basic method for extracting a macro block in the DCT region in accordance with a conventional art;
Figure 2 shows a high speed motion vector search pattern in an HVS (Horizontal and Vertical Search) method;
Figure 3 illustrates positions of luminance component blocks ($B_0 \sim B_3$) belonging to a previously extracted macro block;
Figures 4A and 4B show examples of overlapped previously extracted macro block information and macro block information to be currently extracted;
Figures 5A and 5B show examples of overlapped previously extracted macro block information and macro block information to be currently extracted; and
Figure 6 is a flow chart of a macro block extracting method in accordance with a preferred embodiment of the present invention.

DETAILED DESCRIPTION OF THE PREFERRED EMBODIMENTS

A preferred embodiment of the present invention will now be described.

The present invention proposes a fresh macro block extracting method to improve an excessive amount of calculation as in the conventional art.

In general, in the process of searching a re-set motion vector, there is an overlap portion to a degree between data information of a previously extracted macro block and data information of a macro block to be currently extracted. Thus, the present invention proposes a method for extracting a macro block by using such an information overlap phenomenon.

Figure 3 illustrates positions of luminance component blocks ($B_0 \sim B_3$) belonging to a previously extracted macro block.

With reference to Figure 3, $B_0$ and $B_1$ indicate left/upper and right/upper blocks, while $B_2$ and $B_3$ indicate left/lower and right/tower blocks.

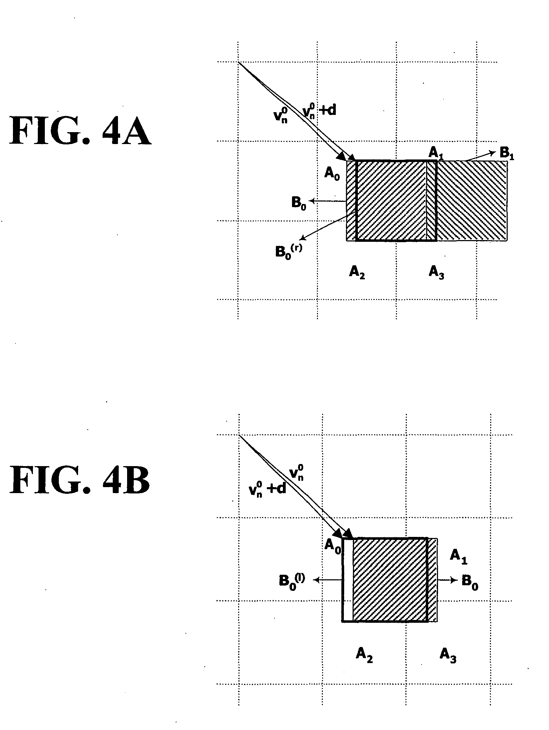

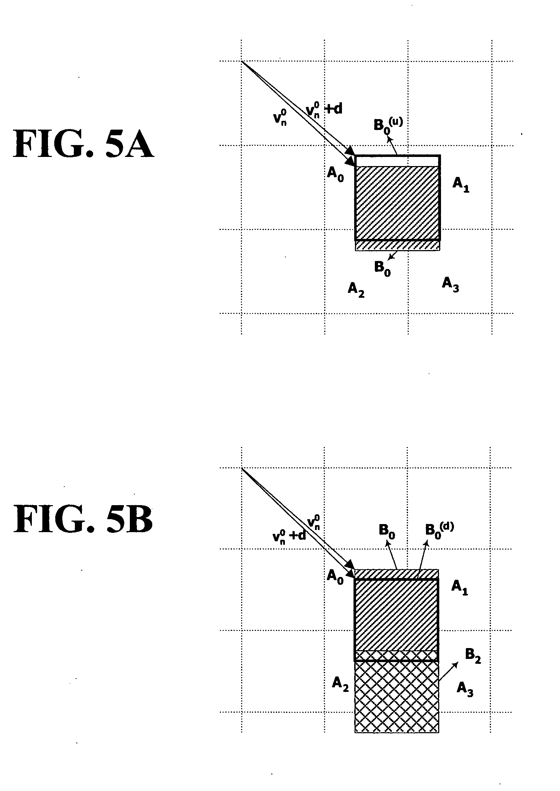

Figures 4A, 4B, 5A and 5B show examples of overlapped previously extracted macro block information and macro block information to be currently extracted.

First, in Figure 4A, $B_0^{(r)}$ signifies a left/upper block of a macro block to be currently extracted. $B_0^{(r)}$ corresponds to the left/upper block of a previously extracted macro block, and exists at a one pixel-shifted position rightward compared to the left block ($B_0$) of the previously extracted macro block. $\mathbf{v}^0$ indicates an initial motion vector of the very previously extracted macro block, and $\mathbf{v}^0_n + \delta$ indicates a motion vector of the macro block to be currently extracted. $\delta$ indicates an offset motion vector and defined by $\delta \in \{(1,0),(\sim 1,0),(0,1),(0,-1)\}$.

Accordingly, $B_0^{(r)}$ overlaps with $B_0$ by as much as 8x7 pixels, and at the same time, overlaps with $B_1$ by as much as 8x1 pixels. From this fact, equation (3) for extracting $B_0^{(r)}$ can be expressed as follows:

$$\hat{B}^{(r)}_0 = \hat{B}_0 \hat{R} + \hat{B}_1 \hat{S} \tag{3}$$

wherein I

$$R = \begin{bmatrix} 0 & 0 \\ I_7 & 0 \end{bmatrix}, \quad S = \begin{bmatrix} 0 & I_1 \\ 0 & 0 \end{bmatrix},$$

$I_k$ is an identity matrix having a size of k x k.

In Figure 4B, $B_0^{(l)}$ signifies a left/upper block of a macro block to be currently extracted, and at a one-pixel moved position leftward compared to the left/upper block of the previously extracted macro block. $B_0^{(l)}$ overlaps with $B_0$ by as much as 8x7 pixels and partially overlaps with $A_0$ and $A_2$. By using the fact, equation (4) for extracting $B_0^{(l)}$ can be expressed as follows:

$$\hat{B}_0^{(l)} = \hat{B}_0 \hat{R}^T + \sum_{i=0,2} \hat{P}_i \hat{A}_i \hat{W}_l \quad \text{------------------------------} \quad (4)$$

whrein $\hat{R}^T = DCT(R^T)$,

$$W_l = \begin{bmatrix} 0 & 0 \\ U_{8-(mx)_8} & 0 \end{bmatrix},$$

and $U_k$ has a size of k x k and is a matrix of which only the component (0,0) is 1 and the other components are all 0.

In a similar manner, as shown in Figure 5A, $B_0^{(u)}$ at a one pixel-shifted position upward compared to B0 can be extracted by equation (5) shown below:

$$\hat{B}_0^{(u)} = \hat{R} \hat{B}_0 + \sum_{i=0,1} \hat{W}_u \hat{A}_i \hat{Q}_i \quad \text{------------------------------} \quad (5)$$

wherein

$$n \ W_u = \begin{bmatrix} 0 & U_{8-(my)_8} \\ 0 & 0 \end{bmatrix}.$$

Also, in a similar method, as shown in Figure 5B, $B_0^{(d)}$ at a one pixel-shifted position downward compared to B0 can be extracted by equation (6) shown below:

$$\hat{B}^{(d)}_0 = \hat{R}^T \hat{B}_0 + \hat{S}^T \hat{B}_2 \tag{6}$$

Accordingly, if dir is (r, l, u, d), $\hat{B}^{(dir)}_0$ can be extracted by using the information overlap. That is, four luminance component blocks (B0) can be obtained depending on each type that the data information of the previously extracted macro block and the data information of the macro block to be currently extracted overlap with each other.

If dir is (r, l, u, d), four $\hat{B}^{(dir)}_l$ can be extracted by using the information overlap as follows:

$$\hat{B}_1^{(r)} = \hat{B}_1 \hat{R} + \sum_{i=1,3} \hat{P}_i \hat{A}_i \hat{W}_r \text{ ------------------- (7)}$$

$$\hat{B}_1^{(l)} = \hat{B}_1 \hat{R}^{\mathsf{T}} + \hat{B}_0 \hat{S}^{\mathsf{T}} \tag{8}$$

$$\hat{B}_1^{(u)} = \hat{R}\hat{B}_1 + \sum_{i=0,1} \hat{W}_u \hat{A}_i \hat{Q}_i \text{ ----------------- (9)}$$

$$\hat{B}_1^{(d)} = \hat{R}^{\mathsf{T}} \hat{B}_1 + \hat{S}^{\mathsf{T}} \hat{B}_3 \tag{10}$$

wherein

$$W_r = \begin{bmatrix} \mathbf{0} & \mathbf{T}_{(mx)_8} \\ \mathbf{0} & \mathbf{0} \end{bmatrix},$$

$T_k$ has a size of k x k, of which only the components (k-1,k-1) is '1' and the other components are all '0'.

If dir is (r,$l$,u,d), four $B_{2s}^{(dir)}$ can be extracted by using the information overlap as follows:

$$\hat{B}_2^{(r)} = \hat{B}_2 \hat{R} + \hat{B}_3 \hat{S} \tag{11}$$

$$\hat{B}_2^{(l)} = \hat{B}_2 \hat{R}^{\mathsf{T}} + \sum_{j=0,2} \hat{P}_j \hat{A}_j \hat{W}_\lambda \text{ ----------------- (12)}$$

$$\hat{B}_2^{(u)} = \hat{R}\hat{B}_2 + \hat{S}\hat{B}_0 \tag{12}$$

$$\hat{B}_2^{(d)} = \hat{R}^{\mathsf{T}} \hat{B}_2 + \sum_{j=2,3} \hat{W}_d \hat{A}_j \hat{Q}_j \text{ ---------------- (14)}$$

wherein

$$W_d = \begin{bmatrix} \mathbf{0} & \mathbf{0} \\ \mathbf{T}_{(my)_8} & \mathbf{0} \end{bmatrix}.$$

If dir is (r,$l$,u,d), four $\hat{B}_3^{(dir)}$s can be extracted by using the information overlap as follows:

$$\hat{B}_3^{(r)} = \hat{B}_3\hat{R} + \sum_{j=1,3} \hat{P}_j \hat{A}_j \hat{W}_r \ \text{------------------} \ (15)$$

$$\hat{B}_3^{(l)} = \hat{B}_1 \hat{R}^T + \hat{B}_2 \hat{S}^T \qquad (16)$$

$$\hat{B}_3^{(u)} = \hat{R}\hat{B}_3 + \hat{S}\hat{B}_1 \qquad (17)$$

$$\hat{B}_3^{(d)} = \hat{R}^T \hat{B}_3 + \sum_{j=2,3} \hat{W}_d \hat{A}_j \hat{Q}_j \ \text{------------------} \ (18)$$

As stated above, the equation used to extract each luminance component block $(B_0 \sim B_3)$ of each current macro block differs depending on the value δ, an offset motion vector. In this case, δ is defined by δ ∈ {(1,0),(-1,0), (0,1),(0,-1)}.

Accordingly, in the present invention, the overlap degree between the data information of the previously extracted macro block and the data information of the macro block to be currently extracted is detected, and then, the above equations are suitably used to extract luminance component blocks of the current macro block.

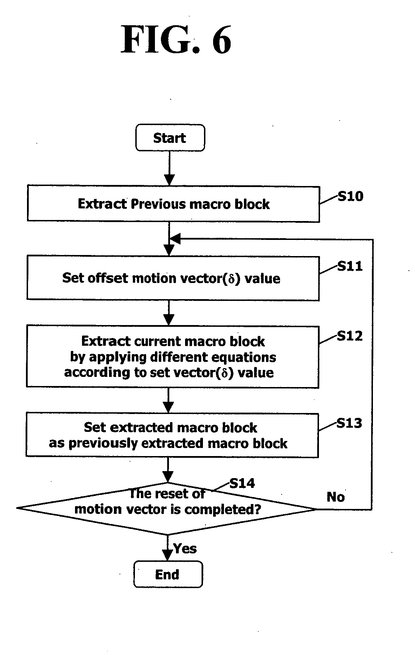

Figure 6 is a flow chart of a macro block extracting method in accordance with a preferred embodiment of the present invention.

As shown in Figure 6, first, a macro block indicated by an initial motion vector is extracted through equation (2). Meanwhile, in the present invention, it can be assumed that, in an initial operation, there already exist an initial motion vector and the macro block information extracted by equation (2).

Thereafter, an overlap degree between the previously extracted macro block information and the information on macro block to be currently extracted is detected, to set an offset motion vector (δ) value (step S11). As the offset motion vector (δ) value is set, respective luminance component blocks $(B_0 \sim B_3)$ in the current macro block are extracted by applying a pertinent equation according to the corresponding (δ) value (step S12).

In other words, if the offset motion vector ( δ ) value is (1,0), $B_0^{(r)}, B_1^{(r)}, B_2^{(r)}, B_3^{(r)}$ are extracted by using equations (3), (7), (11) and (15). If the offset motion vector (δ) value is (-1,0), $B_0^{(l)}, B_1^{(l)}, B_2^{(l)}, B_3^{(l)}$ are extracted by using equations (4), (8), (12) and (16). If the offset motion vector (δ) value is (0,1), $B_0^{(u)}, B_1^{(u)}, B_2^{(u)}, B_3^{(u)}$ are extracted by using equations (5), (9), (13) and (17). If the offset motion vector (δ) value is (0,-1), $B_0^{(d)}, B_1^{(d)}, B_2^{(d)}, B_3^{(d)}$ are extracted by using equations (6), (10), (14) and (18).

Thus, the luminance component blocks $(B_0 \sim B_3)$ of each macro block can be extracted by using suitable equations depending on the type of overlap between the previously extracted macro block information and the macro block information to be currently extracted,

Once the current macro block is extracted, it is set as a previously extracted macro block (step S13). Accordingly, a motion vector indicating the currently set macro block is re-set motion vector.

Thereafter, it is checked whether the motion vector re-setting has been completed (step S14). If the motion vector re-setting has been completed, every process is terminated. If, however, the motion vector re-setting has not been completed, it returns to the step S11 to repeatedly perform the process following the step S11.

As so far described, the method for extracting a macro block at a high speed of the present invention has the following advantages.

That is, for example, by extracting a macro block by using an overlap phenomenon between previously extracted macro block information and macro block information to be currently extracted, the amount of calculation can be considerably reduced compared to the conventional macro block extracting method. If i ∈ {0,1,2,3} for $\hat{B}_i^{(dir)}$ and dir ∈ {r,λ,u,d} and a block to be currently extracted completely overlaps with a previously extracted macro block, it would have such types of equations (3) and (6). If a block to be currently extracted does not completely overlap with a previously extracted macro block but partially overlaps with $A_i$, it would have such types of equations (4) and (5).

Accordingly, when a macro block at a one pixel-shifted position from a previously extracted macro block is extracted, information overlapping by as much as16x15 or 15x16 is used, and in this case, the required amount of calculation is merely $14(=2x2+2x5)N^3$ times of multiplication and $14(=2x2+2x5)$ $N^2 \cdot (N-1)$ times of addition. This means that the present invention reduces 56% of calculation amount compared to the conventional art in which the amount of calculation is required up to $32(=4x8)N^3$ times of multiplication and $32(=4x8)N^2 \cdot (N-1)$ times of addition.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

**Claims**

1.   A macro block extracting method in a wireless system in which a motion vector in a DCT region is reset for a video contents service between a network and a terminal, comprising:

   extracting a macro block indicated by an initial motion vector; and
   extracting a current macro block by using an overlap degree between the extracted macro block information and macro block information to be currently extracted.

2.   The method of claim 1, wherein the extracting step comprises:

   setting an offset motion vector value by detecting an overlap degree between the previously extracted macro block information and macro block information to be currently extracted; and
   obtaining luminance component blocks of the current macro block by using different equations according to the set offset motion vector value.

3.   The method of claim 2, wherein the offset motion vector has a form of (1,0), (-1,0), (0,1) and (0,-1).

4.   The method of claim 2, wherein if the offset motion vector is (1,0), first to fourth luminance component blocks ($\hat{B}_0^{(r)}$ - $\hat{B}_3^{(r)}$) are calculated by equations shown below:

$$\hat{B}_0^{(r)} = \hat{B}_0 \hat{R} + \hat{B}_1 \hat{S}$$

$$\hat{B}_1^{(r)} = \hat{B}_1 \hat{R} + \sum_{i=1,3} \hat{P}_i \hat{A}_i \hat{W}_r$$

$$\hat{B}_2^{(r)} = \hat{B}_2 \hat{R} + \hat{B}_3 \hat{S} \quad \hat{B}_3^{(r)} = \hat{B}_3 \hat{R} + \sum_{j=1,3} \hat{P}_j \hat{A}_j \hat{W}_r$$

   wherein $\hat{B}_0$ - $\hat{B}_3$ indicates first to fourth luminance components of the previously extracted macro block,

$$R = \begin{bmatrix} 0 & 0 \\ I_7 & 0 \end{bmatrix}, \quad S = \begin{bmatrix} 0 & I_1 \\ 0 & 0 \end{bmatrix},$$

$I_k$ is an identity matrix having a size of k x k,

$$W_r = \begin{bmatrix} 0 & T_{(mx)_8} \\ 0 & 0 \end{bmatrix}$$

and $T_k$ has a size of k x k, of which only the component (k-1,k-1) is 1 while the other components are all 8.

5. The method of claim 4, wherein $\hat{A}_i$(i=1,3) indicates second and fourth blocks in a reference image, and $\hat{P}_i$(I=1,3) is such a matrix as shown below:

$$P_1 = \begin{bmatrix} 0 & I_{8-(my)_8} \\ 0 & 0 \end{bmatrix}, \quad P_3 = \begin{bmatrix} 0 & 0 \\ I_{(my)_8} & 0 \end{bmatrix}$$

wherein In is a unit matrix having a size of nxn, my is a vertical component of the motion vector, and $(my)_8$ is a value of modulo 8 of my.

6. The method of claim 2, wherein when the offset motion vector is (-1,0), first to fourth luminance component blocks $(B^{(l)}_0 - B^{(l)}_3)$ are calculated by equation shown below:

$$\hat{B}^{(l)}_0 = \hat{B}_0 \hat{R}^T + \sum_{i=0,2} \hat{P}_i \hat{A}_i \hat{W}_l$$

$$\hat{B}^{(l)}_1 = \hat{B}_1 \hat{R}^T + \hat{B}_0 \hat{S}^T$$

$$\hat{B}^{(l)}_2 = \hat{B}_2 \hat{R}^T + \sum_{j=0,2} \hat{P}_j \hat{A}_j \hat{W}_l$$

$$\hat{B}^{(l)}_3 = \hat{B}_1 \hat{R}^T + \hat{B}_2 \hat{s}^T$$

wherein $\hat{R}^T = DCT(R^T)$,

$$W_l = \begin{bmatrix} 0 & 0 \\ U_{8-(mx)_8} & 0 \end{bmatrix},$$

$U_k$ is a matrix having a size of k x k of which only the component (0,0) is 1 while the other remaining components are all 0.

7. The method of claim 5, wherein $\hat{A}_i$(i=0,2) indicates first and third blocks, and $\hat{P}_i$ (i=0,2) is a matrix as shown below:

$$P_0 = \begin{bmatrix} 0 & I_{8-(my)_8} \\ 0 & 0 \end{bmatrix}, \quad P_2 = \begin{bmatrix} 0 & 0 \\ I_{(my)_8} & 0 \end{bmatrix},$$

8.  The method of claim 2, wherein if the offset motion vector is (0,1), first to fourth component blocks $(\hat{B}_0^{(u)} - \hat{B}_0^{(u)})$ are calculated by equations shown below:

$$\hat{B}_0^{(u)} = \hat{R}\hat{B}_0 + \sum_{i=0,1} \hat{W}_u \hat{A}_i \hat{Q}_i$$

$$\hat{B}_1^{(u)} = \hat{R}\hat{B}_1 + \sum_{i=0,1} \hat{W}_u \hat{A}_i \hat{Q}_i$$

$$\hat{B}_2^{(u)} = \hat{R}\hat{B}_2 + \hat{S}\hat{B}_0$$

$$\hat{B}_3^{(u)} = \hat{R}\hat{B}_3 + \hat{S}\hat{B}_1$$

wherein

$$W_u = \begin{bmatrix} 0 & U_{8-(my)_8} \\ 0 & 0 \end{bmatrix}.$$

9.  The method of claim 8, wherein $\hat{A}_i$ (i=0,1) indicates first and second blocks in a reference image, and $\hat{Q}_i$ (i=0,1) is a matrix as shown below:

$$Q_0 = \begin{bmatrix} 0 & 0 \\ I_{8-(mx)_8} & 0 \end{bmatrix}, \quad Q_1 = \begin{bmatrix} 0 & I_{(mx)_8} \\ 0 & 0 \end{bmatrix}$$

wherein, mx is a horizontal motion vector, and $(mx)_8$ is a value of modulo 8 of mx.

10. The method of claim 2, wherein if the offset motion vector is (0,-1), first to fourth luminance component blocks $(B_0^{(d)} - B_3^{(d)})$ are calculated by equations shown below:

$$\hat{B}_0^{(d)} = \hat{R}^T \hat{B}_0 + \hat{S}^T \hat{B}_2$$

$$\hat{B}_1^{(d)} = \hat{R}^T \hat{B}_1 + \hat{S}^T \hat{B}_3$$

$$\hat{B}_2^{(d)} = \hat{R}^T \hat{B}_2 + \sum_{j=2,3} \hat{W}_d \hat{A}_j \hat{Q}_j$$

$$\hat{B}_3^{(d)} = \hat{R}^T \hat{B}_3 + \sum_{j=2,3} \hat{W}_d \hat{A}_j \hat{Q}_j$$

wherein

$$W_d = \begin{bmatrix} 0 & 0 \\ T_{(my)_8} & 0 \end{bmatrix}.$$

11. The method of claim 10, wherein $\hat{A}_i$(i=2,3) indicates third and fourth blocks in the reference image, and $\hat{Q}_i$ (i=2,3) is a matrix as shown below:

$$Q_2 = \begin{bmatrix} 0 & 0 \\ I_{8-(mx)_8} & 0 \end{bmatrix}, \quad Q_3 = \begin{bmatrix} 0 & I_{(mx)_8} \\ 0 & 0 \end{bmatrix}$$

# FIG. 1

Current Block

Motion Vector

mv

my

mx

$A_0$

$A_1$

$A_2$

$A_3$

Predicted Block
$B_0$

Reference Frame

Current Frame

# FIG. 2

Reset Motion Vector

Initial Motion Vector

# FIG. 3

$B_0$ | $B_1$
$B_2$ | $B_3$

FIG. 4A

FIG. 4B

**FIG. 5A**

**FIG. 5B**

# FIG. 6

```
                    ┌──────────┐
                    │  Start   │
                    └──────────┘
                         │
                         ▼
        ┌─────────────────────────────────┐
        │   Extract Previous macro block   │──S10
        └─────────────────────────────────┘
                         │
                         ▼◄──────────────────┐
        ┌─────────────────────────────────┐ │
        │  Set offset motion vector(δ) value │──S11
        └─────────────────────────────────┘ │
                         │                   │
                         ▼                   │
        ┌─────────────────────────────────┐ │
        │     Extract current macro block  │──S12
        │    by applying different equations│ │
        │   according to set vector(δ) value│ │
        └─────────────────────────────────┘ │
                         │                   │
                         ▼                   │
        ┌─────────────────────────────────┐ │
        │      Set extracted macro block   │──S13
        │  as previously extracted macro block│
        └─────────────────────────────────┘ │
                         │     ╱S14          │
                         ▼    ╱              │
                    ╱─────────────╲     No   │
                   ╱ The reset of   ╲────────┘
                   ╲ motion vector is completed? ╱
                    ╲─────────────╱
                         │Yes
                         ▼
                    ┌──────────┐
                    │   End    │
                    └──────────┘
```